# EUROPEAN PATENT APPLICATION

(11) **EP 4 659 987 A1**
(43) Date of publication of application: **10.12.2025**
(21) Application number: 25180889.5
(22) Date of filing: 04.06.2025
(51) Int. Cl.: B60L 1/00, B60L 58/12

(54) **POWER SYSTEM FOR TRANSPORTATION REFRIGERATION UNIT AND METHOD FOR CONTROLLING POWER THEREOF**

(30) Priority: 04.06.2024 US 202463655899 P
(71) Applicant: Carrier Corporation, Palm Beach Gardens, FL 33418 (US)
(72) Inventor: CHAPEAU, Lucas, 76520 Franqueville Saint Pierre (FR)
(74) Representative: Dehns

(57) **Abstract**

A power system (108) for a vehicle (100) having a TRU (102) is disclosed. The power system (108) includes an energy storage unit (204) adapted to supply power to the TRU (102), and includes an axle generator (208) electrically connected to the energy storage unit (204) to supply power to the energy storage unit (204) and the TRU (102). The power system (108) includes a pressure sensor (220) to sense ambient pressure, and includes a power supply system (206). The power supply system (206) is configured to determine a SoC of the energy storage unit (204), and is configured to determine an altitude of the power system (108) based on the ambient pressure. The power supply system (206) is configured to determine a power output of the axle generator (208), and configured to adjust a power supplied by the energy storage unit (204) and the axle generator (208) to the TRU (102) based on the determined SoC, the determined altitude, and the determined power output.

## Description

### FIELD OF THE INVENTION

The disclosure relates to vehicles having a Transport Refrigeration Unit (TRU), and more specifically to a power system for such a vehicle and a method for controlling power supply to an energy storage unit of the power system.

### BACKGROUND

Vehicles, such as Light Commercial Vehicles (LCVs) or Heavy Commercial Vehicles, are generally deployed for transporting cargo via sea, rail, or road networks. Such vehicles usually include a cargo container for storing cargo to be transported. In order to maintain the quality of the goods in the cargo container, a refrigeration unit may be deployed to such cargo container of the vehicle. Typically, the refrigeration unit provides desired environmental parameters, such as temperature, pressure, humidity, and other conditions to the cargo container. Such refrigeration unit is either powered by an electric power source, a fuel-based power source, or a combination thereof. Further, the fuel-based power source is usually also used to charge the electric power source and power the refrigeration unit.

Currently, the fuel-based power source may include a generator coupled to a wheel axle of the vehicle, where the wheel axle is further coupled to wheels of the vehicle. In this case, the generator is driven to generate electricity by a rotation of the wheel axle and supplies the generated electricity to the refrigeration unit or to the electric power source for charging. Generally, the generator is designed to be operated at a specified voltage level, where a dielectric strength of air is a crucial parameter to ensure optimal operation of the generator.

A common problem that has been identified in current systems arises in that the specified voltage level is usually defined to at least ensure that no dielectric breakdown occur for the air of a specific dielectric strength. However, at different altitudes, the dielectric strength of the air varies which further increases the possibility of dielectric breakdown within the generator operating at the specified voltage level. This results in an arching phenomenon which leads to damaging the generator. For instance, at higher altitudes, the dielectric strength of air reduces compared to the dielectric strength of air at a sea level. Owing to such a reduction in the dielectric strength, the air tends to undergo dielectric breakdown at the specified voltage level of the generator.

Therefore, it is desirable to provide a system and a method that can eliminate one or more of the above-mentioned problems associated with the existing power sources to supply power to the refrigeration unit in the vehicle.

### SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

According to a first aspect of the invention, there is provided a power system for a vehicle having a Transportation Refrigeration Unit (TRU) is disclosed. The power system includes an energy storage unit adapted to supply power to the TRU. Further, the power system includes an axle generator electrically connected to the energy storage unit to supply power to the energy storage unit and the TRU. The power system includes a pressure sensor configured to sense ambient pressure. Further, the power system includes a power supply system in communication with the energy storage unit, the axle generator, the pressure sensor, and the TRU. The power supply system is configured to determine a State of Charge (SoC) of the energy storage unit. Further, the power supply system is configured to determine an altitude of the power system with respect to sea level based on the ambient pressure sensed by the pressure sensor. The power supply system is configured to determine a power output of the axle generator. Further, the power supply system is configured to adjust a power supplied by the energy storage unit and the axle generator to the TRU based on the determined SoC of the energy storage unit, the determined altitude of the power system, and the determined power output of the axle generator.

Optionally, the power supply system is configured to operate in a first power mode in which a first amount of power is to be supplied to the TRU from the energy storage unit, and a second amount of power is to be supplied to the TRU from the axle generator. A ratio of supplied power to the TRU may be adjusted based on the determined SoC of the energy storage unit, the determined altitude of the power system, and the determined power output of the axle generator. The ratio of supplied power may be defined as a ratio of the first amount of power from the energy storage unit and the second amount of power from the axle generator.

Optionally, the power supply system is further configured to compare the determined altitude with an altitude threshold. Further, the power supply system may be configured to adjust the ratio of supplied power to the TRU based on the comparison. The second amount of power from the axle generator to the TRU may be reduced and the first amount of power from the energy storage unit to the TRU may be increased, if the determined altitude is higher than the altitude threshold.

Optionally, the power supply system is configured to compare the determined altitude with an altitude threshold. Further, the power supply system may be configured to adjust the ratio of supplied power to the TRU based on the comparison. The first amount of power from the energy storage unit to the TRU may be increased and the second amount of power from the axle generator to the TRU may be halted, if the determined altitude is higher than the altitude threshold.

Optionally, the power supply system is configured to operate in a second power mode in which a first amount of power is to be supplied to the TRU from the axle generator, and a second amount of power is to be supplied to the energy storage unit from the axle generator. A ratio of supplied power from the axle generator may be adjusted based on the determined SoC of the energy storage unit, the determined altitude of the power system, and the determined power output of the axle generator. The ratio of supplied power may be defined as a ratio of the first amount of power to the TRU and the second amount of power to the energy storage unit.

Optionally, the power supply system is further configured to compare the determined altitude with an altitude threshold. Further, the power supply system may be configured to adjust the ratio of supplied power to the TRU and the energy storage unit based on the comparison. The second amount of power supplied from the axle generator to the energy storage unit may be reduced and the first amount of power supplied from the axle generator to the TRU may remain constant, if the determined altitude is higher than the altitude threshold.

Optionally, the power supply system is further configured to compare the determined SoC of the energy storage unit with a threshold SoC. The power supply system may be configured to adjust the ratio of supplied power to the TRU and the energy storage unit based on the comparison. The first amount of power supplied from the axle generator to the TRU may be reduced and the second amount of power supplied from the axle generator to the energy storage unit may be increased, if the determined SoC is lower than the threshold SoC, or the second amount of power supplied from the axle generator to the energy storage unit may be reduced and the first amount of power supplied from the axle generator to the TRU may be increased, if the determined SoC is higher than the threshold SoC.

Optionally, the second amount of power supplied from the axle generator to the energy storage unit is increased by diverting the power reduced from the first amount of power supplied to the TRU, or the first amount of power supplied from the axle generator to the TRU is increased by diverting the power reduced from the second amount of power supplied to the energy storage unit.

Optionally, the power supply system is configured to operate in a third power mode in which the TRU is completely operated by the power supplied from the axle generator. The power supply system may be configured to compare the determined altitude with an altitude threshold. Further, the power supply system may be configured to adjust the ratio of supplied power to the TRU based on the comparison. An amount of power supplied from the axle generator to the TRU may be reduced, if the determined altitude is higher than the altitude threshold.

Optionally, the power supply system is configured to operate in a fourth power mode in which the TRU is completely operated by the power supplied from the energy storage unit.

Optionally, the energy storage unit includes at least one of a battery, a fuel cell, and a flow battery.

According to a second aspect of the invention, there is provided a method of controlling power supply to a Transportation Refrigeration Unit (TRU) of a vehicle is disclosed. The method includes determining, by a power supply system, a State of Charge (SoC) of an energy storage unit. The power supply system is electrically connected to the energy storage unit, an axle generator, a pressure sensor, and the TRU. Further, the method includes determining, by the power supply system, an altitude of the power system with respect to sea level based on an absolute pressure sensed by the pressure sensor. The method includes determining, by the power supply system, a power output of the axle generator. The method includes adjusting, by the power supply system, power supplied by the energy storage unit and the axle generator to the TRU based on the determined SoC of the energy storage unit, the determined altitude of the power system, and the determined power output of the axle generator.

Optionally, the method includes operating the power supply system in a first power mode. A first amount of power may be supplied to the TRU from the energy storage unit, and a second amount of power may be supplied to the TRU from the axle generator. The method may include comparing the determined altitude with an altitude threshold. Further, the method may include adjusting a ratio of supplied power to the TRU based on the comparison. The second amount of power from the axle generator to the TRU may be reduced and the first amount of power from the energy storage unit may be increased, if the determined altitude is higher than the altitude threshold.

Optionally, the method includes comparing the determined altitude with an altitude threshold. Further, the method may include adjusting the ratio of supplied power to the TRU based on the comparison. The first amount of power from the energy storage unit to the TRU may be increased and the second amount of power from the axle generator to the TRU may be halted, if the determined altitude is higher than the altitude threshold.

Optionally, the method includes operating the power supply system in a second power mode. A first amount of power may be supplied to the TRU from the axle generator, and a second amount of power may be supplied to the energy storage unit from the axle generator. The method may include comparing the determined altitude with an altitude threshold. Further, the method may include adjusting a ratio of supplied power to the TRU and the energy storage unit based on the comparison. The second amount of power supplied from the axle generator to the energy storage unit may be reduced and the first amount of power supplied from the axle generator to the TRU may remain constant, if the determined altitude is higher than the altitude threshold.

Optionally, the method includes comparing the determined SoC of the energy storage unit with a threshold SoC. Further, the method may include adjusting the ratio of supplied power to the TRU and the energy storage unit based on the comparison. The first amount of power supplied from the axle generator to the TRU may be reduced and the second amount of power supplied from the axle generator to the energy storage unit may be increased, if the determined SoC is lower than the threshold SoC, or the second amount of power supplied from the axle generator to the energy storage unit may be reduced and the first amount of power supplied from the axle generator to the TRU may be increased, if the determined SoC is higher than the threshold SoC.

Optionally, the second amount of power supplied from the axle generator to the energy storage unit may be increased by diverting the power reduced from the first amount of power supplied to the TRU, or the first amount of power supplied from the axle generator to the TRU may be increased by diverting the power reduced from the second amount of power supplied to the energy storage unit.

Optionally, the method includes operating the power supply system in a third power mode. The TRU may be completely operated by the power supplied from the axle generator. Further, the method may include comparing the determined altitude with an altitude threshold. The method may include adjusting the ratio of supplied power to the TRU based on the comparison. An amount of power supplied from the axle generator to the TRU may be reduced, if the determined altitude is higher than the altitude threshold.

Optionally, the method includes operating the power supply system in a fourth power mode. The TRU may be operated by the power supplied from the energy storage unit.

Optionally, the energy storage unit includes at least one of a battery, a fuel cell, and a flow battery.

To further clarify the advantages and features of the methods, systems, and apparatuses/devices, a more particular description of the methods, systems, and apparatuses/devices will be rendered by reference to specific embodiments thereof, which are illustrated in the appended drawings. It is appreciated that these drawings depict only typical embodiments of the disclosure and are therefore not to be considered limiting of its scope. The disclosure will be described and explained with additional specificity and detail with the accompanying drawings.

### BRIEF DESCRIPTION OF THE DRAWINGS

These and other features, aspects, and advantages of the invention will become better understood when the following detailed description is read with reference to the accompanying drawings in which like characters represent like parts throughout the drawings, wherein:
Figure 1 illustrates a perspective view of a vehicle having a Transport Refrigeration Unit (TRU);
Figure 2 illustrates a block diagram of the power system 108 deployed in the vehicle 100;
Figure 3 illustrates a block diagram depicting an operation of the power supply system in a first power mode;
Figure 4 illustrates a block diagram depicting an operation of the power supply system in the second power mode;
Figure 5 illustrates a block diagram depicting an operation of the power supply system in the third power mode;
Figure 6 illustrates a block diagram depicting an operation of the power supply system in the fourth power mode; and
Figure 7 illustrates a flowchart depicting a method 700 for controlling power supply to the TRU of the vehicle.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION OF FIGURES

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system and device, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Embodiments of the disclosure will be described below in detail with reference to the accompanying drawings.

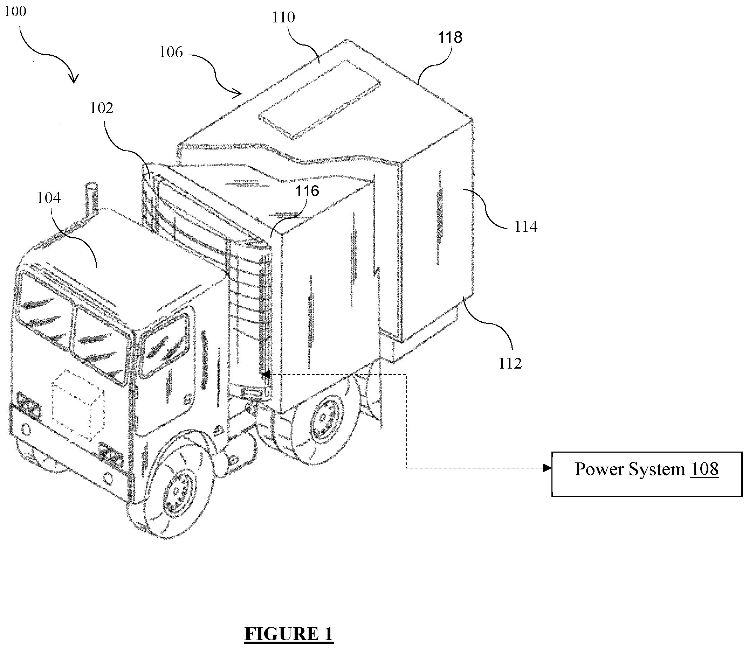

**Figure** 1 illustrates a perspective view of a vehicle 100 having a Transport Refrigeration Unit (TRU) 102, according to one or more embodiments of the disclosure. In one embodiment, the vehicle 100 may be embodied as a fuel-based vehicle having a combustion engine which may be part of a powertrain or a drive system of such vehicle. In another embodiment, the vehicle 100 may be embodied as an electric vehicle having electric motors to provide propulsive force for traversing such vehicle. In yet another embodiment, the vehicle 100 may be embodied as a hybrid vehicle having a combination of a combustion engine and one or more electric motors.

Referring to Figure 1, the vehicle 100 may include an operator's cabin 104, a container 106, the TRU 102, and a power system 108. The operator's cabin 104 may be located at a front of the vehicle 100 and coupled to the container 106. In an embodiment, the container 106 may be pulled by the vehicle 100. It is understood that embodiments described herein may be applied to shipping containers that are shipped by rail, sea, air, or any other suitable container, thus the vehicle 100 may be a truck, train, boat, airplane, helicopter, etc. The container 106 may be coupled to the vehicle 100 and is thus pulled or propelled to desired destinations.

In an embodiment, the container 106 may include a top wall 110, a bottom wall 112 opposed to and spaced from the top wall 110, a pair of side walls 114 spaced from and opposed to one another, and front and rear walls 116, 118 spaced from and opposed to one another. The front wall 116 may be closest to the vehicle 100. The container 106 may further include doors (not shown) at the rear wall 118, or any other wall. The walls 110, 112, 114, 116, 118 may together define the boundaries of a cargo compartment within the container 106.

In one or more embodiments, the vehicle 100 may be used to transport and distribute cargo, such as perishable goods and environmentally sensitive goods, herein referred to as perishable goods. The perishable goods may include, but are not limited to, fruits, vegetables, grains, beans, nuts, eggs, dairy, seed, flowers, meat, poultry, fish, ice, blood, pharmaceuticals, and any other suitable cargo requiring cold chain transport.

In the illustrated embodiment, the TRU 102 may be coupled to the container 106 and positioned on the front wall 116 of the container 106. The TRU 102 may be adapted to provide desired environmental parameters, such as temperature, pressure, humidity, carbon dioxide, ethylene, ozone, light exposure, vibration exposure, and other conditions to the cargo compartment of the container 106. In one or more embodiments, the TRU 102 may be embodied as a refrigeration system capable of providing a desired temperature range and a humidity range. Although, in the illustrated embodiment, the implementation of the power system 108 is explained with respect to the vehicle 100 with the TRU 102. It should not be construed as limiting, and the power system 108 can also be implemented in the vehicle 100 without the TRU 102 and having at least one electric power source.

In one or more embodiments, the TRU 102 may include, but is not limited to, a compressor, an electric compressor motor, a condenser that may be air cooled, a condenser fan assembly, a receiver, a filter dryer, a heat exchanger, an expansion valve, an evaporator, an evaporator fan assembly, a suction modulation valve, and a controller that may include a computer-based processor ( e.g., microprocessor). Referring to Figure 1, the TRU 102 may be in communication with the power system 108 of the vehicle 100. The power system 108 may be configured to supply power for operating the TRU 102 or at least the aforementioned components of the TRU 102.

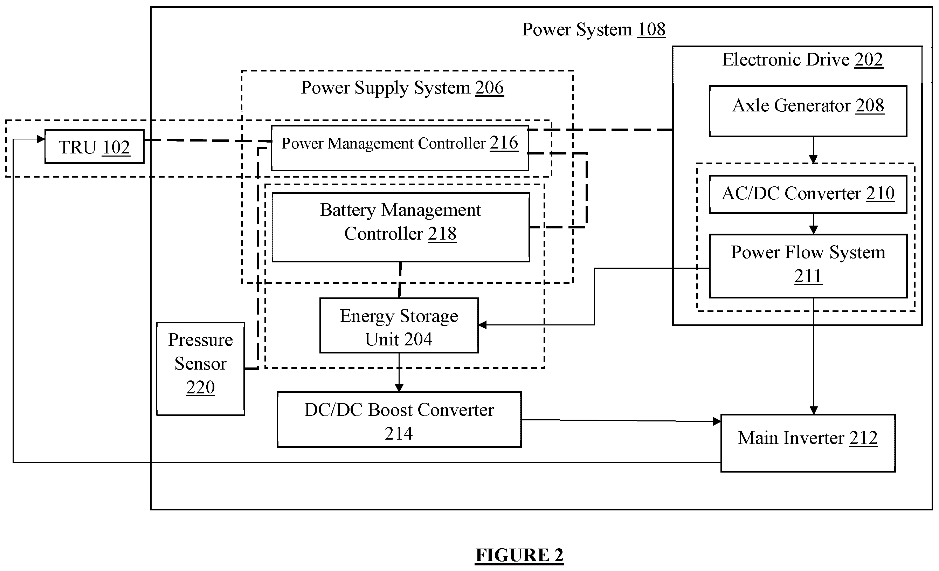

Constructional and operational details of the power system 108 are explained in detail with respect to Figures 2-6 of the disclosure.

**Figure** 2 illustrates a block diagram of the power system 108 deployed in the vehicle 100, according to one or more embodiments of the disclosure. In the illustrated embodiment, the power system 108 may include, but is not limited to, an electronic drive 202, an energy storage unit 204, and a power supply system 206. The electronic drive 202, the energy storage unit 204, and the power supply system 206 may be in communication with each other and with the TRU 102. As mentioned earlier, the power system 108 may be configured to supply power to the TRU 102. In one or more embodiments, the electronic drive 202 and the energy storage unit 204 may be configured to selectively supply power to the TRU 102.

In the illustrated embodiment, the electronic drive 202 may include, but is not limited to, an axle generator 208 and a converter 210, such as an AC/DC converter 210. The axle generator 208 may be electrically connected to the energy storage unit 204 and may be adapted to supply power to at least one of the energy storage unit 204 and the TRU 102. The axle generator 208 may be mounted on an axle or a hub of the vehicle 100. The axle generator 208 may be configured to recover rotational energy from the axle or the hub when the vehicle 100 is in motion. For instance, the axle generator 208 may be configured to recover the rotational energy when the axle of the vehicle 100 is rotating due to acceleration, de-acceleration, coasting, or braking. Further, the axle generator 208 may be configured to convert the recovered rotational energy into electrical energy, herein referred to as the power.

In the illustrated embodiment, the axle generator 208 may be embodied as an Alternate Current (AC) generator configured to convert the rotational energy into the AC power. In such an embodiment, the axle generator 208 may be electrically connected to the AC/DC converter 210 configured to convert a first three-phase AC power to a first DC power based on a requirement of the TRU 102 and/or based on various other parameters, such as an altitude of the vehicle 100. The first three-phase AC power may be generated at AC voltage V₁, AC current I₁, and a frequency f₁. The axle generator 208 may be asynchronous or synchronous. The AC/DC converter 210 may be configured to convert the first three-phase AC power to the first DC power having DC voltage V₁ₐ and DC current I₁ₐ.

In one or more embodiments, the AC/DC converter 210 of the electronic drive 202 may include, but is not limited to, a voltage control function and a current control function, each configured to facilitate the power conversion. The voltage control function may include a voltage regulation function and may be configured to monitor an output voltage from the axle generator 208 and maintain a constant voltage out of the voltage control function. The voltage control function may communicate status to the power supply system 206. The current control function may monitor and communicate to the TRU 102 the status of the current drawn from the axle generator 208. In an embodiment, the current may be limited depending on the power demands of the TRU 102.

In the illustrated embodiment, a main inverter 212 may be deployed to convert the DC power, such as the first DC power, from the electronic drive 202 into AC power, such as a second three-phase AC power. In one or more embodiments, the main inverter 212 may be a stand-alone unit or integral with the TRU 102. In the illustrated embodiment, the power system 108 may include the main inverter 212 electrically connected to the TRU 102 and the AC/DC converter 210 of the electronic drive 202. The main inverter 212 may be configured to convert the DC power received from the AC/DC converter 210 of the electronic drive 202 into the AC power. Subsequently, the main inverter 212 may be configured to supply the converted AC power to the TRU 102. In one or more embodiments, the main inverter 212 may include, but is not limited to, a voltage control function, a current control function, and a frequency converter function, each configured to facilitate the power conversion. The voltage control function may include a voltage regulation function and may be configured to monitor an output voltage from the axle generator 208 and maintain a constant voltage out of the voltage control function. The voltage control function may communicate status to the power supply system 206. The current control function may monitor and communicate to the TRU 102 the status of the current drawn from the axle generator 208. In an embodiment, the current may be limited depending on the power demands of the TRU 102. Further, the frequency converter function may monitor the frequency of the three-phase power produced by the main inverter 212 to ensure it exhibits the desired frequency as determined by the voltage control function and the power supply system 206, for supplying to the TRU 102.

In another embodiment, the axle generator 208 may be embodied as a DC generator configured to convert the rotational energy into the DC power, without departing from the scope of the disclosure. In such an embodiment, a DC-AC converter may be electrically connected to the axle generator 208 and configured to receive the DC power at DC voltage V₁ₐ and DC current I₁ₐ. Based on the power requirement of the TRU 102 and/or based on various other parameters, such as an altitude of the vehicle 100, the DC-AC converter may be configured to convert the received DC power to the second three-phase AC power having voltage V₂, a second AC current I₂, and a frequency f₂. The second three-phase AC power may be transmitted to the TRU 102. In such an embodiment, the main inverter 212 may not be electrically connected to the DC-AC converter. In one or more embodiments, the DC-AC converter of the electronic drive 202 may include, but is not limited to, a voltage control function, a current control function, and a frequency converter, each configured to facilitate the power conversion. In the present embodiment, the voltage control function may include a voltage regulation function and may be configured to monitor the output DC voltage from the axle generator 208 and maintain a constant AC voltage out of the voltage control function. The current control function may monitor and communicate to the TRU 102 the status of the current drawn from the axle generator 208. The frequency converter function may monitor the frequency of the three-phase power produced by the DC-AC converter to ensure it exhibits the desired frequency as determined by the voltage control function and the power supply system 206, for supplying to the TRU 102.

Although, the operation of the power supply system 206 in the present disclosure is explained with respect to the axle generator 208 embodied as the AC generator. However, it should not be construed limiting and the power supply system 206 can also be implemented for the DC generator as explained in the previous paragraph, without departing from the scope of the present disclosure.

Referring to Figure 2, the energy storage unit 204 may be in communication with the power supply system 206 and electrically connected to the electronic drive 202. Further, the energy storage unit 204 may be electrically connected to the TRU 102 and adapted to supply power to the TRU 102. In one or more embodiments, the energy storage unit 204 may include at least one of a battery, a fuel cell, and a flow battery. The energy storage unit 204 may be configured to receive power from the electronic drive 202. In particular, the energy storage unit 204 may be charged by the electronic drive 202 and store energy which is to be selectively supplied to the TRU 102. In the illustrated embodiment, the energy storage unit 204 may be electrically connected to the main inverter 212 via a DC/DC boost converter 214. The DC/DC boost converter 214 may be configured to regulate the output voltage of the energy storage unit 204. For instance, the DC/DC boost converter 214 may increase the output voltage of the energy storage unit 204.

As explained earlier, the power supply system 206 may be in communication with the energy storage unit 204, the axle generator 208, and the TRU 102. In an embodiment, the power supply system 206 may be configured to control a flow of power supply to the TRU 102 from at least one of the electronic drive 202 and the energy storage unit 204. In one or more embodiments, the power system 108 may include a power flow system 211 in communication with the power supply system 206. In one or more embodiments, the power flow system 211 may be a standalone unit, integral with the electronic drive 202, and/or integral with the TRU 102. In the illustrated embodiment, the power flow system 211 may be integral with the electronic drive 202. The power flow system 211 may operate as a power bus to connect various power sources, such as the axle generator 208 and the energy storage unit 204, together. In one or more embodiments, the power flow system 211 may control switching, directing, or redirecting power to/from the axle generator to the energy storage and the TRU. The power flow system 211 may include at least one bus control switching device (not shown) to control switching, directing, or redirecting power to/from the axle generator to the energy storage and the TRU. The at least one bus control switching device may be operated by the power supply system 206 based on various factions to control switching, directing, or redirecting power. The at least one bus control switching device may include, but is not limited to, electromechanical and solid-state semiconductor switching devices including relays, contactors, solid state contactors as well as semiconductor switching devices such as transistors, FETS, MOSFETS, IGBT's, thyristors, SCR's, and the like.

Referring to Figure 2, in the illustrated embodiment, the power supply system 206 may include, but is not limited to, a power management controller 216 and a battery management controller 218. The power management controller 216 may interchangeably be referred to as the controller 216, without departing from the scope of the disclosure. In one or more embodiments, the controller 216 may be embodied as a TRU controller or a standalone controller. The operational aspects of the power supply system 206 may be explained with respect to the controller 216 being embodied as the TRU controller. However, it should not be construed as limiting and the controller 216 being embodied as the standalone controller can also be implemented in the power supply system 206.

The controller 216 may be in communication with the electronic drive 202 and the TRU 102. In one or more embodiments, the controller 216 may or may not be in communication with the battery management controller 218. In one or more embodiments, the communication between various components, such as the controller 216, the electronic drive 202, the TRU 102, the energy storage unit 204, and the battery management controller 218, may be embodied as wireless communication or wired communication. The aforesaid components may communicate with each other via communication interfaces including, but not limited to, Controller Area Network (CAN), without departing from the scope of the disclosure.

In one or more embodiments, each of the controller 216 and the battery management controller 218 may include a processor, memory, modules, and data. The modules and the memory are coupled to the processor. The processor can be a single processing unit or a number of units, all of which could include multiple computing units. The processor may be implemented as one or more microprocessors, microcomputers, microcontrollers, digital signal processors, central processing units, state machines, logic circuitries, and/or any devices that manipulate signals based on operational instructions. Among other capabilities, the processor is configured to fetch and execute computer-readable instructions and data stored in the memory.

The memory may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The modules, amongst other things, include routines, programs, objects, components, data structures, etc., which perform particular tasks or implement data types. The modules may also be implemented as, signal processor(s), state machine(s), logic circuitries, and/or any other device or component that manipulate signals based on operational instructions.

Further, the modules can be implemented in hardware, instructions executed by a processing unit, or by a combination thereof. The processing unit can comprise a computer, a processor, such as the processor, a state machine, a logic array, or any other suitable devices capable of processing instructions. The processing unit can be a general-purpose processor which executes instructions to cause the general-purpose processor to perform the required tasks or, the processing unit can be dedicated to performing the required functions. In another aspect of the present disclosure, the modules may be machine-readable instructions (software) which, when executed by a processor/processing unit, perform any of the described functionalities.

In one or more embodiments, the controller 216 may be a stand-alone unit or integral with the TRU 102, without departing from the scope of the disclosure. The controller 216 may be configured to receive various inputs indicative of an operational state of the TRU 102 and determine a power requirement for the TRU 102. Based on the power requirements, the controller 216 may be configured to direct the power supply from at least one of the electronic drive 202 and the energy storage unit 204 to the TRU 102. In one or more embodiments, the controller 216 may be in communication with a plurality of sensors, such as temperature sensors, of the TRU 102 and, may be configured to estimate the power requirement of the TRU 102 based on the inputs received from the plurality of sensors of the TRU 102.

Based on the estimated power requirement, the controller 216 may be configured to operate the power flow system 211 to direct the power supply from the electronic drive 202 to the TRU 102. Further, the controller 216 may be configured to receive inputs indicative of an operational state of the energy storage unit 204 and accordingly, operate the power flow system 211 to direct at least a portion of the power supply from the electronic drive 202 to the energy storage unit 204 for charging the energy storage unit 204. Furthermore, the controller 216 may be configured to direct the power supply from the energy storage unit 204 to the TRU 102.

In one or more embodiments, based on the power requirement, the controller 216 may determine whether only the axle generator 208 can satisfy the power requirement of the TRU 102. If the axle generator 208 can satisfy the power requirement of the TRU 102, then the remaining power may be used to charge the energy storage unit 204. Further, if the axle generator 208 can only partially satisfy the power requirement of the TRU 102, then the remaining power is supplied to the TRU 102 from the energy storage unit 204. Furthermore, if the axle generator 208 fails to satisfy the power requirement of the TRU 102, then the power requirement of the TRU 102 may be satisfied by the energy storage unit 204.

Further, the power supply system 206 may be configured to determine a State of Charge (SoC) of the energy storage unit 204. In one or more embodiments, the battery management controller 218 of the power supply system 206 may be a stand-alone unit or integral with the energy storage unit 204. The battery management controller 218 may be configured to determine parameters associated with the operational state of the energy storage unit 204. In the illustrated embodiment, the battery management controller 218 of the power supply system 206 may be in communication with the energy storage unit 204 and may be configured to determine the SoC of the energy storage unit 204.

Further, referring to Figure 2, the power system 108 may include a pressure sensor 220 in communication with the controller 216 and may be configured to sense ambient pressure. In an exemplary embodiment, the pressure sensor 220 may be embodied as an absolute pressure sensor, without departing from the scope of the present disclosure. The controller 216 may be configured to determine an altitude of the power system 108 with respect to sea level based on the ambient pressure sensed by the pressure sensor 220.

In an embodiment, the power supply system 206 may be configured to determine a power output of the axle generator 208. In one or more embodiments, the controller 216 may be configured to determine at least one operational characteristic associated with the vehicle 100. The at least one operational characteristic may be indicative of at least a speeding condition of the vehicle 100. In one or more embodiments, the speeding condition may be indicative of at least one of an acceleration condition, a de-acceleration condition, a coasting condition, and a braking condition. Based on the determined operational characteristics, the controller 216 may determine the power output of the axle generator 208.

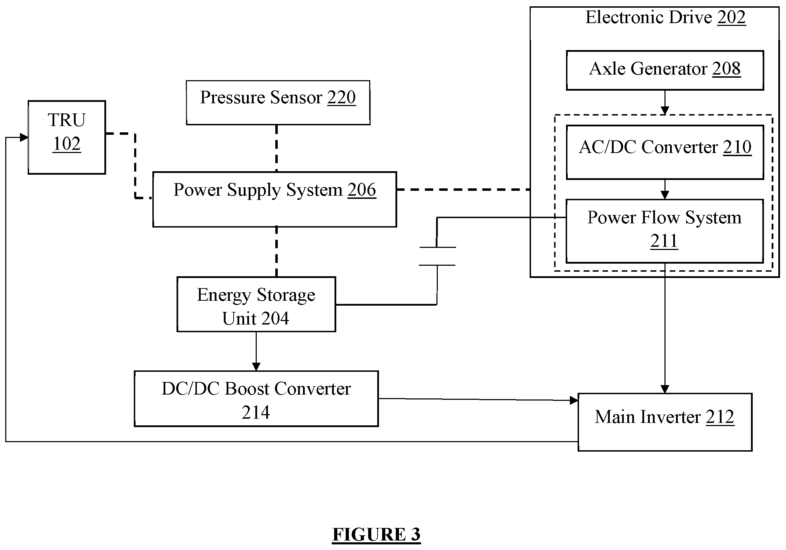

Further, the power supply system 206 may be configured to adjust a power supplied by the energy storage unit 204 and the axle generator 208 to the TRU 102 based on the determined SoC of the energy storage unit 204, the determined altitude of the power system 108, and the determined power output of the axle generator 208. In one or more embodiments, the power supply system 206 may be configured to operate in a plurality of power modes including, but not limited to, a first power mode, a second power mode, a third power mode, and a fourth power mode. In each power mode, the power supplied to the TRU 102 may be adjusted based on the determined SoC of the energy storage unit 204, the determined altitude of the power system 108, and the determined power output of the axle generator 208. Each power mode may be further explained in detail in the subsequent paragraphs with respect to Figures 3-6 of the present disclosure.

**Figure 3** illustrates a block diagram depicting an operation of the power supply system 206 in a first power mode, according to an embodiment of the present disclosure. In the illustrated embodiment, the power supply system 206 may be configured to operate in the first power mode to supply power to the TRU 102. In the first power mode, the power may be collectively supplied to the TRU 102 from the energy storage unit 204 and the axle generator 208.

As explained earlier, the controller 216 of the power supply system 206 may be configured to determine the power requirement of the TRU 102, the SoC of the energy storage unit 204, and the power output of the axle generator 208. In one or more embodiments, based on the determined power requirement of the TRU 102, the SoC of the energy storage unit 204, and the power output of the axle generator 208, the controller 216 may determine whether the power requirement of the TRU 102 is higher than the power output of the axle generator 208. If the power requirement of the TRU 102 is higher than the power output of the axle generator 208, then the power supply system 206 may be operated in the first power mode to supply additional power from the energy storage unit 204 to satisfy the determined power requirement of the TRU 102. For example, the controller 216 determines that the power requirement of the TRU 102 is 10 kilowatts (kW) and the power output of the axle generator 208 is 5 kW. In such an example, the power supply system 206 is operated in the first power mode to supply additional power, i.e., 5 kW, from the energy storage unit 204 to the TRU 102.

In one or more embodiments, in the first power mode, the power supply system 206 may operate the energy storage unit 204 to supply a first amount of power to the TRU 102. In an exemplary embodiment, the battery management controller 218 of the power supply system 206 may control a discharging circuit (not shown) of the energy storage unit 204 to regulate the first amount of power supplied to the TRU 102 from the energy storage unit 204. In one or more embodiments, the DC/DC boost converter 214 may further increase the output voltage of the DC power supplied by the energy storage unit 204. Further, the main inverter 212 may receive the power with the increased voltage from the DC/DC boost converter 214, where the main inverter 212 may convert the DC power to the three-phase AC power which is ultimately supplied as the first amount of power to the TRU 102. For example, the DC power supplied by the energy storage unit 204 may have a DC voltage V₁ₐ and a DC current I₁ₐ. In such an example, the DC/DC boost converter 214 may increase the voltage V₁ₐ to V_{1b} and supply the DC power with voltage V_{1b} to the main inverter 212. The main inverter 212 may convert the DC power having the DC voltage V_{1b} and the DC current I₁ₐ to the AC power having an AC voltage V₁, an AC current I₁, and a frequency f₁. Subsequently, the converted AC power from the main inverter 212 may be supplied to the TRU 102 as the first amount of power.

Further, a second amount of power may be supplied to the TRU 102 from the axle generator 208. In one or more embodiments, the power supply system 206 may operate the power flow system 211 to divert the second amount of power from the axle generator 208 to the TRU 102. Further, the controller 216 may control the AC/DC converter to regulate the conversion of the AC power to the DC power. As explained earlier, the AC/DC converter 210 may include the voltage control function and the current control function, each configured to facilitate converting the AC power to the DC power. The controller 216 may be configured to regulate the voltage control function, a current control function, and a frequency converter to regulate the DC power which is to be further converted in the AC power for supplying to the TRU 102. The power flow system 211 may transfer the DC power, i.e., the first amount of power, from the AC/DC converter 210 to the main inverter 212, where the main inverter 212 may convert the DC power, i.e., the first amount of power, to the AC power to be supplied to the TRU 102.

In the first power mode, the controller 216 of the power supply system 206 may be configured to adjust the power supplied by the energy storage unit 204 and the axle generator 208 to the TRU 102 based on the determined SoC of the energy storage unit 204, the determined altitude of the power system 108, and the determined power output of the axle generator 208. In one or more embodiments, a ratio of supplied power to the TRU 102 may be adjusted based on the determined SoC of the energy storage unit 204, the determined altitude of the power system 108, and the determined power output of the axle generator 208. The ratio of supplied power may be defined as a ratio of the first amount of power from the energy storage unit 204 and the second amount of power from the axle generator 208.

The controller 216 may be configured to receive an input, indicative of the ambient pressure, from the pressure sensor 220. Based on the received input, the controller 216 may be configured to determine the altitude of the power system 108 with respect to the seal level. Further, the controller 216 may be configured to compare the determined altitude with an altitude threshold. In one or more embodiments, the altitude threshold may be pre-stored in a memory of the controller 216. Furthermore, the controller 216 may be configured to adjust the ratio of supplied power to the TRU 102 based on the comparison.

In one embodiment, the second amount of power from the axle generator 208 to the TRU 102 may be reduced and the first amount of power from the energy storage unit 204 to the TRU 102 may be increased, if the determined altitude is higher than the altitude threshold. In such an embodiment, to reduce the second amount of power, the controller 216 may be configured to regulate the voltage function and the current control function of the AC/DC converter 210 which is electrically connected to the axle generator 208. For example, the controller 216 may regulate the volage function of the AC/DC converter 210 to reduce the output voltage of the DC power transmitted by the AC/DC converter 210 to the main inverter 212 through the power flow system 211, and thereby reducing the power output. In such an example, the controller 216 may transmit a control signal such as, e.g., a Pulse Width Modulation (PWM) signal, based on the determined altitude, to regulate the voltage function of the AC/DC converter 210 to reduce the output voltage of the DC power transmitted by the AC/DC converter 210 which retrospectively results in reduced flow of power from the axle generator 208 to the AC/DC converter 210. Such regulating of the AC/DC converter 210 by the controller 216 may reduce the flow of power from the axle generator 208 to the AC/DC converter 210 and thereby, eliminating the possibility of dielectric breakdown for the air within the axle generator 208. Further, to increase the first amount of power, the battery management controller 218 may regulate the power output from the energy storage unit 204. In an exemplary embodiment, the battery management controller 218 may control a discharging circuit (not shown) of the energy storage unit 204 to regulate the first amount of power supplied to the TRU 102.

For example, the first amount of power supplied to the TRU 102 from the energy storage unit 204 is 5 kW and the second amount of power supplied to the TRU 102 from the axle generator 208 is 5 kW. In such an example, the controller 216 determine the altitude as 1500 m based on the ambient pressure sensed by the pressure sensor 220. The controller 216 compares the altitude, i.e., 1500 m, with the altitude threshold, i.e., 1000 m. Based on the comparison, the controller 216 determines that the altitude is higher than the altitude threshold. Subsequently, the controller 216 adjust the ratio of supplied power to the TRU 102 based on the determined SoC of the energy storage unit 204 and the determined altitude. The controller 216 reduces the second amount of power from 5 kW to 2 kW by regulating at least the voltage function of the AC/DC converter 210. Further, the controller 216 increases the first amount of power from 5 kW to 8 kW to be supplied from the energy storage unit 204 to the TRU 102.

In another embodiment, the first amount of power from the energy storage unit 204 to the TRU 102 is increased and the second amount of power from the axle generator 208 to the TRU 102 is halted, if the determined altitude is higher than the altitude threshold. In such an embodiment, to increase the first amount of power, the battery management controller 218 may regulate the power output from the energy storage unit 204. In an exemplary embodiment, the battery management controller 218 may control the discharging circuit (not shown) of the energy storage unit 204 to regulate the first amount of power supplied to the TRU 102. Further, in the present embodiment, to halt the second amount of power from the axle generator 208 to the TRU, the controller 216 may operate the power flow system 211 to restrict the flow of power from the AC/DC converter 210 to the main inverter 212, and eventually restricting the flow of power from the axle generator 208 to the TRU 102.

For example, the first amount of power supplied to the TRU 102 from the energy storage unit 204 is 5 kW and the second amount of power supplied to the TRU 102 from the axle generator 208 is 5 kW. In such an example, the controller 216 determine the altitude as 1500 m based on the ambient pressure sensed by the pressure sensor. The controller 216 compares the altitude, i.e., 1500 m, with the altitude threshold, i.e., 1000 m. Based on the comparison, the controller 216 determines that the altitude is higher than the altitude threshold. Subsequently, the controller 216 adjusts the ratio of supplied power to the TRU 102 based on the determined SoC of the energy storage unit 204 and the determined altitude. The controller 216 halts the transmission of the second amount of power from the axle generator 208 to the TRU 102. Further, the controller 216 increases the first amount of power from 5 kW to 10 kW to be supplied from the energy storage unit 204 to the TRU 102.

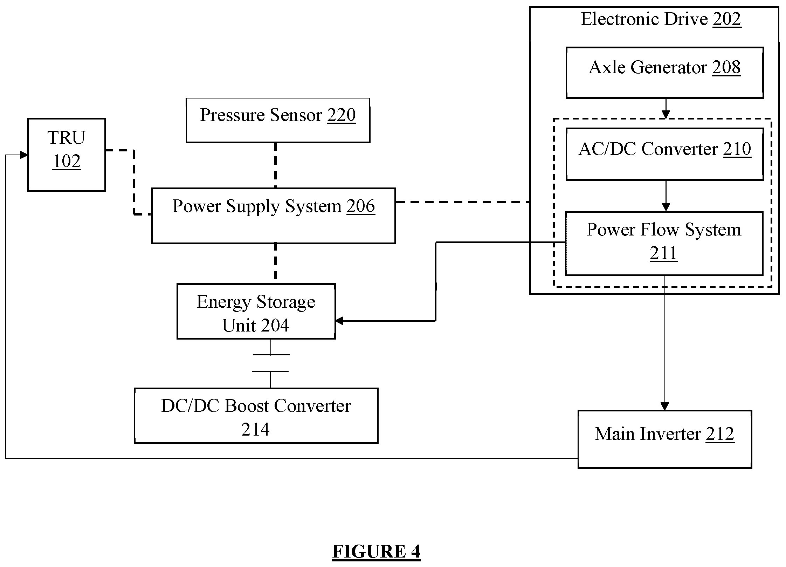

**Figure 4** illustrates a block diagram depicting an operation of the power supply system 206 in the second power mode, according to an embodiment of the present disclosure. In the illustrated embodiment, the power supply system 206 may be configured to operate in the second power mode to supply power to the TRU 102 and the energy storage unit 204 from the axle generator 208. In the second power mode, the power requirement of the TRU 102 may be entirely satisfied by the axle generator 208, and additionally, the axle generator 208 may also supply power for charging the energy storage unit 204.

As explained earlier, the controller 216 may be configured to determine the power requirement of the TRU 102, the SoC of the energy storage unit 204, and the power output of the axle generator 208. In one or more embodiments, based on the determined power requirement of the TRU 102, the SoC of the energy storage unit 204, and the power output of the axle generator 208, the controller 216 may determine whether the power requirement of the TRU 102 is lesser than the power output of the axle generator 208 and whether the SoC of the energy storage unit 204 is less than a threshold SoC. If the power requirement of the TRU 102 is lesser than the power output of the axle generator 208 and the SoC is lesser than the threshold SoC, then the power supply system 206 may be operated in the second power mode to satisfy the power requirement of the TRU 102 entirely by the axle generator 208, and also to charge the energy storage unit 204 by the axle generator 208. For example, the controller 216 determines that the power requirement of the TRU 102 is 10 kilowatts (kW), and the power output of the axle generator is 15 kW. Further, the battery management controller 218 determines that the SoC is 40% which is less than the threshold SoC, i.e., 65%. In such an example, the power supply system 206 is operated in the second power mode to supply the power, i.e., 10 kW, from the axle generator 208 to the TRU 102 and the rest of power, i.e., 5 kW, is supplied to the energy storage unit 204 for charging.

In one or more embodiments, in the second power mode, the power supply system 206 may regulate the AC/DC converter 210 and operate the power flow system 211 to supply a first amount of power to the TRU 102 from the axle generator 208. As explained earlier, the AC/DC converter 210 may include the voltage control function and the current control function, each configured to facilitate converting the AC power to the DC power. The controller 216 may be configured to regulate the voltage control function, the current control function, and the frequency converter to regulate the DC power which is to be further converted in the AC power for supplying to the TRU 102. The DC power from the AC/DC converter 210 may be transferred to the power flow system 211. Further, in the second power mode, the controller 216 may operate the power flow system 211 to divert DC power to the main inverter 212. The main inverter 212 may convert the DC power to the AC power, i.e., the first amount of power, to be supplied to the TRU 102. Further, a second amount of power may be supplied to the energy storage unit 204 from the axle generator 208 through the power flow system 211. In the second power mode, the controller 216 may operate the power flow system 211 to divert the second amount of power, i.e., DC power, to the energy storage unit 204. In an exemplary embodiment, the battery management controller 218 may control a charging circuit (not shown) of the energy storage unit 204 to regulate the first amount of power drawn from the axle generator 208 by the energy storage unit 204 through the power flow system 211.

In the second power mode, the controller 216 of the power supply system 206 may be configured to adjust the power supplied by the axle generator 208 to the TRU 102 and the energy storage unit 204 based on the determined SoC of the energy storage unit 204, the determined altitude of the power system 108, and the determined power output of the axle generator 208. In one or more embodiments, a ratio of supplied power from the axle generator 208 may be adjusted based on the determined SoC of the energy storage unit 204, the determined altitude of the power system 108, and the determined power output of the axle generator 208. The ratio of supplied power may be defined as a ratio of the first amount of power supplied to the TRU 102 and the second amount of power supplied to the energy storage unit 204.

In the second power mode, the controller 216 may be configured to receive an input, indicative of the ambient pressure, from the pressure sensor 220. Based on the received input, the controller 216 may be configured to determine the altitude of the power system 108 with respect to the seal level. Further, the controller 216 may be configured to compare the determined altitude with an altitude threshold. In one or more embodiments, the altitude threshold may be pre-stored in a memory of the controller 216. Furthermore, the controller 216 may be configured to adjust the ratio of supplied power to the TRU 102 and the energy storage unit 204 from the axle generator 208 based on the comparison.

In one embodiment, the second amount of power supplied from the axle generator 208 to the energy storage unit 204 may be reduced and the first amount of power supplied from the axle generator 208 to the TRU 102 may remain constant, if the determined altitude is higher than the altitude threshold. In such an embodiment, to reduce the second amount of power, the battery management controller 218 of the power supply system 206 may control the charging circuit of the energy storage unit 204 to reduce the second amount of power drawn by the energy storage unit 204 from the axle generator 208 through the power flow system 211. Prior to the power adjustment, the total amount of power supplied by the axle generator 208 may be equal to a sum of the first amount of power and the second amount of power. Now, when the determined altitude is higher than the altitude threshold, the total amount of power supplied by the axle generator 208 may be required to be reduced. Therefore, the controller 216 may regulate the AC/DC converter 210 to reduce the power supplied to the power flow system 211, when the determined altitude is higher than the altitude threshold. For example, the controller 216 may regulate the volage function of the AC/DC converter 210 to reduce the output voltage of the DC power transmitted by the AC/DC converter 210 to the power flow system 211. In such an example, the controller 216 may transmit a control signal, e.g., a Pulse Width Modulation (PWM) signal, based on the determined altitude, to regulate the voltage function of the AC/DC converter 210 to reduce the output voltage of the DC power transmitted by the AC/DC converter 210 which retrospectively results in reduced flow of power from the axle generator 208 to the AC/DC converter 210. Such regulating of the AC/DC converter 210 by the controller 216 may reduce the flow of power from the axle generator 208 to the AC/DC converter 210 and thereby, eliminating the possibility of dielectric breakdown for the air within the axle generator 208. Further, the battery management controller 218 may control the charging circuit to reduce the second amount of power drawn by the energy storage unit 204 from the AC/DC converter 210 through the power flow system 211. Owing to such a reduction of the second amount of power, the first amount of power supplied through the power flow system 211 to the TRU 102 may remain constant.

For example, the first amount of power supplied to the TRU 102 by the axle generator 208 is 5 kW and the second amount of power supplied by the axle generator 208 to the energy storage unit 204 is 5 kW. In such an example, the controller 216 determine the altitude as 1500 m based on the ambient pressure sensed by the pressure sensor. The controller 216 compares the altitude, i.e., 1500 m, with the altitude threshold, i.e., 1000 m. Based on the comparison, the controller 216 determines that the altitude is higher than the altitude threshold. Subsequently, the controller 216 adjusts the ratio of supplied power from the axle generator 208 to the TRU 102 and the energy storage unit 204 based on the determined altitude and the SoC of the energy storage unit 204. The controller 216 reduces the second amount of power from 5 kW to 2 kW which is to be drawn by the energy storage unit 204 from the axle generator 208.

In another embodiment, the first amount of power supplied from the axle generator 208 to the TRU 102 may be reduced and the second amount of power supplied from the axle generator 208 to the energy storage unit 204 may be increased, if the determined SoC is lower than the threshold SoC. In such an embodiment, the controller 216 may operate the power flow system 211 to reduce the first amount of power supplied to the TRU 102 from the axle generator 208 by diverting a portion of the first amount of power to the energy storage unit 204. Accordingly, the controller 216 may operate the power flow system 211 to increase the second amount of power supplied to the energy storage unit 204 from the axle generator 208 by diverting an additional power, i.e., the portion of the first amount of power, to the energy storage unit 204. In particular, the second amount of power supplied from the axle generator 208 to the energy storage unit 204 may be increased by diverting the power reduced from the first amount of power supplied to the TRU 102. In other words, the power flow system 211 may reduce the first amount of power supplied to the TRU 102, and divert the reduced amount of power to the energy storage unit 204 to increase the second amount of power for charging the energy storage unit 204.

In yet another embodiment, the second amount of power supplied from the axle generator 208 to the energy storage unit 204 may be reduced and the first amount of power supplied from the axle generator 208 to the TRU 102 may be increased, if the determined SoC is higher than the threshold SoC. In such an embodiment, the controller 216 may operate the power flow system 211 to reduce the second amount of power supplied to the energy storage unit 204 from the axle generator 208. Subsequently, the controller 216 may operate the power flow system 211 to increase the first amount of power supplied to the TRU from the axle generator 208. The first amount of power supplied from the axle generator 208 to the TRU 102 may be increased by diverting the power reduced from the second amount of power supplied to the energy storage unit 204. In particular, the power flow system 211 may reduce the second amount of power supplied to the energy storage unit 204, and divert the reduced amount of power to the TRU 102 to increase the first amount of power.

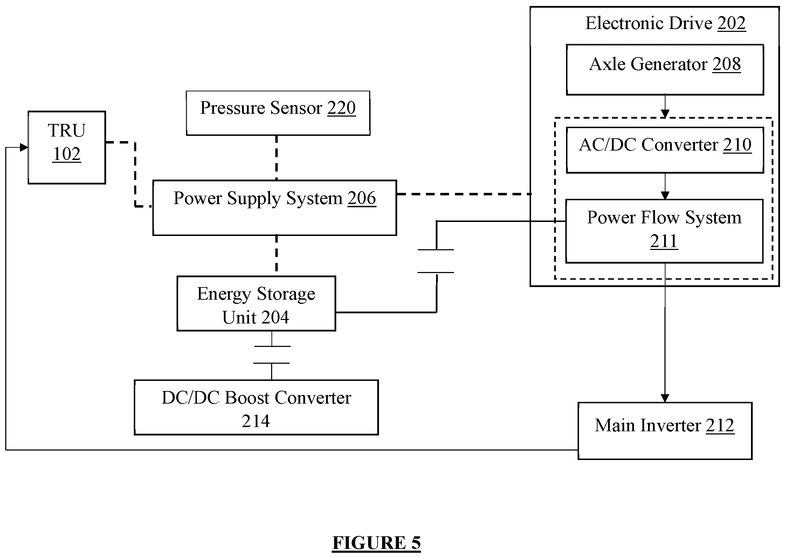

**Figure 5** illustrates a block diagram depicting an operation of the power supply system 206 in the third power mode, according to an embodiment of the present disclosure. In the illustrated embodiment, the power supply system 206 may be configured to operate in the third power mode to supply power to the TRU 102. In the third power mode, the power may be completely supplied to from the axle generator 208 to the TRU 102. In particular, the TRU 102 may be completely operated by the power supplied from the axle generator 208. In the third power mode, the controller 216 of the power supply system 206 may be configured to adjust the power supplied by the axle generator 208 to the TRU 102 based on the determined altitude of the power system and the determined power output of the axle generator 208.

In one or more embodiments, a ratio of supplied power to the TRU 102 may be adjusted based on the determined altitude of the power system 108 and the determined power output of the axle generator 208. As explained earlier, the controller 216 may be configured to receive an input, indicative of the ambient pressure, from the pressure sensor 220. Based on the received input, the controller 216 may be configured to determine the altitude of the power system 108 with respect to the seal level. Further, the controller 216 may be configured to compare the determined altitude with an altitude threshold. Further, the controller 216 may be configured to adjust the ratio of supplied power to the TRU 102 based on the comparison.

In an embodiment, an amount of power supplied from the axle generator 208 to the TRU 102 is reduced, if the determined altitude is higher than the altitude threshold. In such an embodiment, to reduce the amount of power, the controller 216 may be configured to regulate the voltage function and the current control function of the AC/DC converter 210 which is electrically connected to the axle generator 208. For example, the controller 216 may regulate the volage function of the AC/DC converter 210 to reduce the output voltage of the DC power transmitted by the AC/DC converter 210 to the main inverter 212 through the power flow system 211, and thereby reducing the power output. In such an example, the controller 216 may issue a control signal, e.g., a Pulse Width Modulation (PWM) signal, based on the determined altitude, to regulate the voltage function of the AC/DC converter 210 to reduce the output voltage of the DC power transmitted by the AC/DC converter 210 which retrospectively results in reduced flow of power from the axle generator 208 to the AC/DC converter 210. Such regulating of the AC/DC converter 210 by the controller 216 may reduce the flow of power from the axle generator 208 to the AC/DC converter 210 and thereby, reducing the possibility of dielectric breakdown for the air within the axle generator 208.

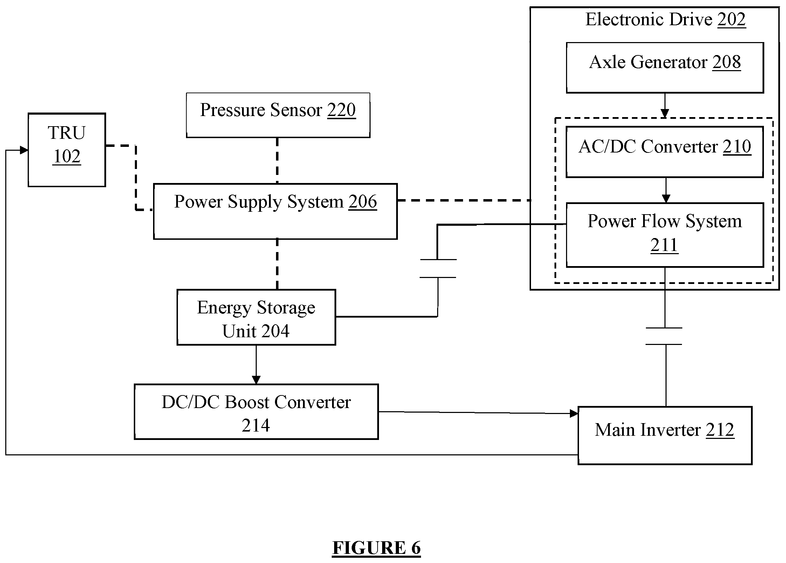

**Figure 6** illustrates a block diagram depicting an operation of the power supply system 206 in the fourth power mode, according to an embodiment of the present disclosure. In the illustrated embodiment, the power supply system 206 may be configured to operate in the fourth power mode to supply power to the TRU 102. In the fourth power mode, the TRU 102 may be completely operated by the power supplied from the energy storage unit 204. In one or more embodiments, the battery management controller 218 may control the discharging circuit of the energy storage unit 204 to regulate an amount of power supplied to the TRU 102. Based on the power requirement of the TRU 102 and the SoC of the energy storage unit 204, the battery management controller 218 may control the discharging circuit of the energy storage unit 204 to increase or decrease the amount of power supplied to the TRU 102.

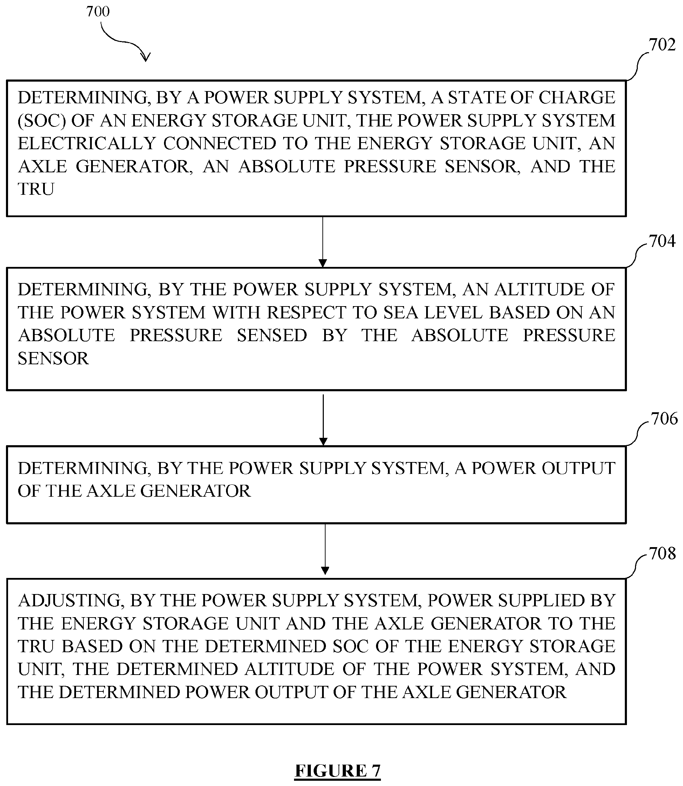

**Figure 7** illustrates a flowchart depicting a method 700 for controlling power supply to the TRU 102 of the vehicle 100, according to one or more embodiments of the present disclosure. While the below-mentioned steps of Figure 7 are shown and described in a particular sequence, the steps may occur in variations to the sequence in accordance with various embodiments of the disclosure. Further, the details related to various steps of Figure 7, which are already covered in the description related to Figures 1-6 are not discussed again in detail here for the sake of brevity.

At step 702, the method 700 may include determining, by the power supply system 206, the SoC of the energy storage unit 204. The power supply system 206 may be electrically connected to the energy storage unit 204, the axle generator 208, the pressure sensor 220, and the TRU 102.

At step 704, the method 700 may include determining, by the power supply system 206, the altitude of the power system 108 with respect to sea level based on the absolute pressure sensed by the pressure sensor 220. Further, at step 706, the method 700 may include determining, by the power supply system 206, the power output of the axle generator 208.

At step 708, the method 700 may include adjusting, by the power supply system 206, power supplied by the energy storage unit 204 and the axle generator 208 to the TRU 102 based on the determined SoC of the energy storage unit 204, the determined altitude of the power system 108, and the determined power output of the axle generator 208.

In one or more embodiments, the method 700 may include operating the power supply system 206 in the first power mode. The first amount of power may be supplied to the TRU 102 from the energy storage unit 204, and the second amount of power may be supplied to the TRU 102 from the axle generator 208. Further, the method 700 may include comparing the determined altitude with the altitude threshold. The method 700 may include adjusting the ratio of supplied power to the TRU 102 based on the comparison. The second amount of power from the axle generator 208 to the TRU 102 may be reduced and the first amount of power from the energy storage unit 204 may be increased, if the determined altitude is higher than the altitude threshold.

In one or more embodiments, the method 700 may include comparing the determined altitude with the altitude threshold. Further, the method 700 may include adjusting the ratio of supplied power to the TRU 102 based on the comparison. The first amount of power from the energy storage unit 204 to the TRU 102 may be increased and the second amount of power from the axle generator 208 to the TRU 102 may be halted, if the determined altitude is higher than the altitude threshold.

In one or more embodiments, the method 700 may include operating the power supply system 206 in the second power mode. The first amount of power may be to be supplied to the TRU from the axle generator 208, and the second amount of power may be to be supplied to the energy storage unit 204 from the axle generator 208. Further, the method 700 may include comparing the determined altitude with the altitude threshold. The method 700 may include adjusting the ratio of supplied power to the TRU 102 and the energy storage unit 204 based on the comparison. The second amount of power supplied from the axle generator 208 to the energy storage unit 204 may be reduced and the first amount of power supplied from the axle generator 208 to the TRU 102 may remain constant, if the determined altitude is higher than the altitude threshold.

In one or more embodiments, the method 700 may include comparing the determined SoC of the energy storage unit 204 with the threshold SoC. Further, the method 700 may include adjusting the ratio of supplied power to the TRU 102 and the energy storage unit 204 based on the comparison. In one embodiment, the first amount of power supplied from the axle generator 208 to the TRU 102 may be reduced and the second amount of power supplied from the axle generator 208 to the energy storage unit 204 may be increased, if the determined SoC is lower than the threshold SoC. In such an embodiment, the second amount of power supplied from the axle generator 208 to the energy storage unit 204 may be increased by diverting the power reduced from the first amount of power supplied to the TRU 102. Alternatively, in another embodiment, the second amount of power supplied from the axle generator 208 to the energy storage unit 204 may be reduced and the first amount of power supplied from the axle generator 208 to the TRU 102 may be increased, if the determined SoC is higher than the threshold SoC. In such an embodiment, the first amount of power supplied from the axle generator 208 to the TRU 102 may be increased by diverting the power reduced from the second amount of power supplied to the energy storage unit 204.

In one or more embodiments, the method 700 may include operating the power supply system 206 in the third power mode. The TRU 102 may be completely operated by the power supplied from the axle generator 208. The method 700 may include comparing the determined altitude with an altitude threshold. Further, the method 700 may include adjusting the ratio of supplied power to the TRU 102 based on the comparison. The amount of power supplied from the axle generator 208 to the TRU 102 may be reduced, if the determined altitude is higher than the altitude threshold.

In one or more embodiments, the method 700 may include operating the power supply system 206 in a fourth power mode. The TRU 102 may be operated by the power supplied from the energy storage unit 204.

As would be gathered, the disclosure offers the power system 108 and the method 700 of supplying power to the TRU 102. As explained earlier, the power system 108 is implemented to at least determine the altitude of the power system 108 and adjust the power supply from the axle generator 208 to the TRU 102 and/or the energy storage unit 204 based on the determined altitude. Such regulating of the power supply ensures that the axle generator 208 remains operational even when the vehicle 100 is traversing at higher altitudes. For instance, when the determined altitude is higher than the threshold altitude, the power system 108 reduces a power supplied to the TRU from the axle generator 208, thereby eliminating the possibility of dielectric breakdown within the axle generator 208 due to varied dielectric strength of the air available at the altitude higher than the threshold altitude. Therefore, the implementation of such a power system 108 enables the axle generator 208 to effectively operate even at higher altitudes. Further, the power system 108 also enables the effective operation of the axle generator 208 that are not specifically designed to be operated at higher altitudes. Therefore, the power system 108 and the method 700 of the present disclosure are efficient, durable, flexible in implementation, cost-effective, and convenient.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A power system (108) for a vehicle (100) having a Transportation Refrigeration Unit, TRU, (102), the power system comprising:
an energy storage unit (204) adapted to supply power to the TRU (102);
an axle generator (208) electrically connected to the energy storage unit (204) to supply power to the energy storage unit (204) and the TRU (102);
a pressure sensor (220) configured to sense ambient pressure; and
a power supply system (206) in communication with the energy storage unit (204), the axle generator (208), the pressure sensor (220), and the TRU (102), wherein the power supply system (206) is configured to:
determine a State of Charge (SoC) of the energy storage unit (204);
determine an altitude of the power system (108) with respect to sea level based on the ambient pressure sensed by the pressure sensor (220);
determine a power output of the axle generator (208); and
adjust a power supplied by the energy storage unit (204) and the axle generator (208) to the TRU (102) based on the determined SoC of the energy storage unit (204), the determined altitude of the power system (108), and the determined power output of the axle generator (208).

2. The power system (108) according to claim 1, wherein the power supply system (206) is configured to operate in a first power mode in which:
a first amount of power is to be supplied to the TRU (102) from the energy storage unit (204); and
a second amount of power is to be supplied to the TRU (102) from the axle generator (208),
wherein a ratio of supplied power to the TRU (102) is adjusted based on the determined SoC of the energy storage unit (204), the determined altitude of the power system (108), and the determined power output of the axle generator (208), wherein the ratio of supplied power is defined as a ratio of the first amount of power from the energy storage unit (204) and the second amount of power from the axle generator (208); and, optionally,
wherein the power supply system (206) is further configured to:
compare the determined altitude with an altitude threshold; and
adjust the ratio of supplied power to the TRU (102) based on the comparison, wherein:
the second amount of power from the axle generator (208) to the TRU (102) is reduced and the first amount of power from the energy storage unit (204) to the TRU (102) is increased, if the determined altitude is higher than the altitude threshold.

3. The power system (108) according to claim 2, wherein the power supply system (206) is configured to:
compare the determined altitude with an or the altitude threshold; and
adjust the ratio of supplied power to the TRU (102) based on the comparison, wherein:
the first amount of power from the energy storage unit (204) to the TRU (102) is increased and the second amount of power from the axle generator (208) to the TRU (102) is halted, if the determined altitude is higher than the altitude threshold.

4. The power system (108) according to any preceding claim, wherein the power supply system (206) is configured to operate in a second power mode in which:
a first amount of power is to be supplied to the TRU (102) from the axle generator (208); and
a second amount of power is to be supplied to the energy storage unit (204) from the axle generator (208),
wherein a ratio of supplied power from the axle generator (208) is adjusted based on the determined SoC of the energy storage unit (204), the determined altitude of the power system (108), and the determined power output of the axle generator (208), wherein the ratio of supplied power is defined as a ratio of the first amount of power to the TRU (102) and the second amount of power to the energy storage unit (204).

5. The power system (108) according to claim 4, wherein the power supply system (206) is further configured to:
compare the determined altitude with an altitude threshold; and
adjust the ratio of supplied power to the TRU (102) and the energy storage unit (204) based on the comparison, wherein:
the second amount of power supplied from the axle generator (208) to the energy storage unit (204) is reduced and the first amount of power supplied from the axle generator (208) to the TRU (102) remains constant, if the determined altitude is higher than the altitude threshold;
and/or
wherein the power supply system is further configured to:
compare the determined SoC of the energy storage unit (204) with a threshold SoC; and
adjust the ratio of supplied power to the TRU (102) and the energy storage unit (204) based on the comparison, wherein:
the first amount of power supplied from the axle generator (208) to the TRU (102) is reduced and the second amount of power supplied from the axle generator (208) to the energy storage unit (204) is increased, if the determined SoC is lower than the threshold SoC, or
the second amount of power supplied from the axle generator (208) to the energy storage unit (204) is reduced and the first amount of power supplied from the axle generator (208) to the TRU (102) is increased, if the determined SoC is higher than the threshold SoC; and, optionally,
the second amount of power supplied from the axle generator (208) to the energy storage unit (204) is increased by diverting the power reduced from the first amount of power supplied to the TRU (102), or
the first amount of power supplied from the axle generator (208) to the TRU (102) is increased by diverting the power reduced from the second amount of power supplied to the energy storage unit (204).

6. The power system (108) according to any preceding claim, wherein the power supply system (206) is configured to operate in a third power mode in which:
the TRU (102) is completely operated by the power supplied from the axle generator (208),
wherein:
the power supply system (206) is configured to:
compare the determined altitude with an altitude threshold; and
adjust the ratio of supplied power to the TRU (102) based on the comparison, wherein:
an amount of power supplied from the axle generator (208) to the TRU (102) is reduced, if the determined altitude is higher than the altitude threshold.

7. The power system (108) according to any preceding claim, wherein the power supply system (206) is configured to operate in a fourth power mode in which:
the TRU (102) is completely operated by the power supplied from the energy storage unit (204).

8. The power system (108) according to any of the preceding claims, wherein the energy storage unit (204) comprises at least one of a battery, a fuel cell, and a flow battery.

9. A method (700) of controlling power supply to a Transportation Refrigeration Unit (TRU) of a vehicle, the method comprising:
determining (702), by a power supply system, a State of Charge (SoC) of an energy storage unit, the power supply system electrically connected to the energy storage unit, an axle generator, a pressure sensor, and the TRU;
determining (704), by the power supply system, an altitude of the power system with respect to sea level based on an absolute pressure sensed by the pressure sensor;
determining (706), by the power supply system, a power output of the axle generator; and
adjusting (706), by the power supply system, power supplied by the energy storage unit and the axle generator to the TRU based on the determined SoC of the energy storage unit, the determined altitude of the power system, and the determined power output of the axle generator.

10. The method according to claim 9, further comprising:
operating the power supply system in a first power mode, wherein a first amount of power is to be supplied to the TRU from the energy storage unit, and a second amount of power is to be supplied to the TRU from the axle generator;
comparing the determined altitude with an altitude threshold; and
adjusting a ratio of supplied power to the TRU based on the comparison, wherein:
the second amount of power from the axle generator to the TRU is reduced and the first amount of power from the energy storage unit is increased, if the determined altitude is higher than the altitude threshold; and, optionally,
further comprising:
comparing the determined altitude with the altitude threshold; and
adjusting the ratio of supplied power to the TRU based on the comparison, wherein the first amount of power from the energy storage unit to the TRU is increased and the second amount of power from the axle generator to the TRU is halted, if the determined altitude is higher than the altitude threshold.

11. The method according to claim 9 or 10, further comprising:
operating the power supply system in a second power mode, wherein a first amount of power is to be supplied to the TRU from the axle generator, and a second amount of power is to be supplied to the energy storage unit from the axle generator;
comparing the determined altitude with an altitude threshold; and
adjusting a ratio of supplied power to the TRU and the energy storage unit based on the comparison, wherein:
the second amount of power supplied from the axle generator to the energy storage unit is reduced and the first amount of power supplied from the axle generator to the TRU remains constant, if the determined altitude is higher than the altitude threshold; and, optionally,
further comprising:
comparing the determined SoC of the energy storage unit with a threshold SoC; and
adjusting the ratio of supplied power to the TRU and the energy storage unit based on the comparison, wherein:
the first amount of power supplied from the axle generator to the TRU is reduced and the second amount of power supplied from the axle generator to the energy storage unit is increased, if the determined SoC is lower than the threshold SoC, or
the second amount of power supplied from the axle generator to the energy storage unit is reduced and the first amount of power supplied from the axle generator to the TRU is increased, if the determined SoC is higher than the threshold SoC.

12. The method according to claim 16, wherein:
the second amount of power supplied from the axle generator to the energy storage unit is increased by diverting the power reduced from the first amount of power supplied to the TRU, or
the first amount of power supplied from the axle generator to the TRU is increased by diverting the power reduced from the second amount of power supplied to the energy storage unit.

13. The method according to any of claims 9 to 12, further comprising:
operating the power supply system in a third power mode, wherein the TRU is completely operated by the power supplied from the axle generator;
comparing the determined altitude with an altitude threshold; and
adjusting the ratio of supplied power to the TRU based on the comparison, wherein an amount of power supplied from the axle generator to the TRU is reduced, if the determined altitude is higher than the altitude threshold.

14. The method according to any of claims 9 to 13, further comprising:
operating the power supply system in a fourth power mode, wherein the TRU is operated by the power supplied from the energy storage unit.

15. The method according to any of claims 9 to 14, wherein the energy storage unit comprises at least one of a battery, a fuel cell, and a flow battery.
